# EUROPÄISCHE PATENTSCHRIFT

(11) **EP 3 712 216 B1**
(45) Veröffentlichungstag und Bekanntmachung des Hinweises auf die Patenterteilung: **18.01.2023**
(21) Anmeldenummer: 20163124.9
(22) Anmeldetag: 13.03.2020
(51) Int. Cl.: C09D 1/04, C09D 5/02, C09D 7/47, C09D 7/63

(54) **STABILISATOREN FÜR DISPERSIONSSILIKATFARBEN**
STABILIZERS FOR DISPERSION SILICATE PAINTS
STABILISATEURS POUR PEINTURES DE SILICATE EN DISPERSION

(30) Priorität: 18.03.2019 EP 19163416
(43) Veröffentlichungstag der Anmeldung: 23.09.2020
(73) Patentinhaber: BK Giulini GmbH, 68526 Ladenburg (DE)
(72) Erfinder: SCHMITT, Michael, 69124 Heidelberg (DE); STAFFEL, Thomas, 67269 Grünstadt (DE); ZIMMERMANN, Lucas, 68526 Ladenburg (DE); GELMONT, Mark, 3292205 Haifa (IL)
(74) Vertreter: Reitstötter Kinzebach

(56) Entgegenhaltungen:
- EP-A1- 3 275 952
- EP-A2- 3 354 694
- WO-A2-2008/037382
- DE-B3- 10 260 540
- DE-U1-202016 003 070
- US-A1- 2003 127 024

## Beschreibung

Die vorliegende Erfindung betrifft die Verwendung von N,N,N',N'-Tetrakis(2-hydroxypropyl)hexan-1,6-diamin in wässrigen Beschichtungsmitteln, welche Wasserglas und mindestens ein organisches, polymeres Bindemittel enthalten. Die Erfindung betrifft außerdem wässrige Beschichtungsmittel, welche N,N,N',N'-Tetrakis(2-hydroxypropyl)-hexan-1,6-diamin, Wasserglas und mindestens ein organisches, polymeres Bindemittel enthalten.

Für die Beschichtung von Untergründen sind verschiedene wasserglashaltige Beschichtungsmittel bekannt. Als "Wasserglas" werden amorphe, wasserlösliche Natrium-, Kalium- und Lithiumsilicate sowie deren wässrige Lösungen bezeichnet. Beim Trocknen einer solchen Beschichtung bildet Wasserglas irreversibel wasserunlösliche Kieselsäure ("Verkieselung") und fördert dadurch sowohl die Haftung des Beschichtungsmittels auf dem Untergrund als auch dessen mechanische Festigkeit nach der Trocknung.

Beispiele für wässrige, wasserglashaltige Beschichtungsmittel sind Dispersionssilikatfarben. Dispersionssilikatfarben enthalten nach DIN 18363 neben Wasserglas und wenigstens einem wasserglasbeständigen Pigment, wenigstens ein polymeres organisches Bindemittel, üblicherweise in Form einer wässrigen Polymerdispersion, wobei der Gesamtgehalt an organischen Bestandteilen bis zu 5 Gew.-%, bezogen auf das Gesamtgewicht der Dispersionssilikatfarbe, betragen darf. Die organischen, polymeren Bindemittel erhöhen beispielsweise die Wasserfestigkeit des getrockneten Anstrichs.

Wasserglashaltige Beschichtungsmittel weisen einen hohen pH-Wert auf, der üblicherweise im Bereich von pH 10 bis pH 14 liegt. Daher kann bei wasserglashaltigen Beschichtungsmitteln vorteilhafterweise auf die Verwendung von Bioziden verzichtet werden.

Wässrige, wasserglashaltige Beschichtungsmittel wie Dispersionssilikatfarben sind typischerweise strukturviskos bzw. scherverdünnend, d. h. die Viskosität derartiger Beschichtungsmittel verringert sich bei Einwirkung von hohen Scherkräften. Beschichtungsmittel mit derartigen rheologischen Eigenschaften lassen sich gut mit Werkzeugen wie Pinsel, Bürste oder Rolle auftragen, da hierdurch das Beschichtungsmittel beim Auftragen stark geschert wird und demzufolge das Beschichtungsmittel gleichmäßig fließt. Zwar erlaubt ein scherverdünnendes Verhalten vorteilhafterweise eine einfache Handhabung des Beschichtungsmittels. Allerdings steigt die Viskosität in der Regel abrupt wieder auf das Ausgangsniveau an, sobald keine Scherkräfte mehr einwirken. Dies kann ein gleichmäßiges Verlaufen des Anstrichs ("Egalisieren") erschweren und zu einer ungleichmäßigen Dicke der aufgebrachten Schicht führen.

Ein weiteres Problem wässriger, wasserglashaltiger Beschichtungsmittel besteht darin, dass ihre Viskosität bei längerer Lagerung stark ansteigen kann und die Farbe unbrauchbar wird. Die WO 02/00798 A1 beschreibt Dispersionssilikatfarben mit einem Wasserglasanteil von maximal 2 Gew.-%, welchen eine ausreichende Stabilität zugeschrieben wird.

Dem Viskositätsanstieg kann auch durch die Verwendung von Stabilisatoren entgegengewirkt werden. Beispielsweise kann durch bestimmte quaternisierte Ammoniumverbindungen eine gute Lagerstabilität derartiger Beschichtungsmittel gewährleistet werden. Derartige Ammoniumverbindungen enthalten jedoch typischerweise größere Mengen organischer Lösungsmittel, welche den Anteil an flüchtiger organischer Verbindungen (VOC) im Beschichtungsmittel erhöhen. Insbesondere für die Anwendung im Innenbereich sind derartige Stabilisatoren nicht geeignet, da hier strenge VOC-Grenzwerte einzuhalten sind.

Lösungsmittelarme bzw. lösungsmittelfreie Stabilisatoren sind daher wünschenswert. So beschreibt die EP 1 431 354 A1 die Verwendung von Diaminen als Stabilisatoren für im Wesentlichen lösemittelfreie, wässrige, wasserglashaltige Beschichtungsmittel wie Dispersionssilikatfarben und Putze. Die rheologischen Eigenschaften der Beschichtungsmittel sind jedoch nicht vollständig zufriedenstellend.

WO 2008/037382 beschreibt die Verwendung einer Kombination von N-haltigen Verbindungen mit einem Molekulargewicht von 120 bis 10.000 und Alkylsilikonaten zur Viskositätsstabiliserung von Silikatbinder-haltigen Formulierungen.

Aufgabe der vorliegenden Erfindung ist die Bereitstellung von Stabilisatoren für wässrige Beschichtungsmittel, welche Wasserglas und ein organisches, polymeres Bindemittel enthalten. Die Stabilisatoren sollen nicht nur einen unangemessenen Viskositätsanstieg der Beschichtungsmittel bei Lagerung gewährleisten, sondern auch dazu führen, dass die wässrigen Beschichtungsmittel beim Aufbringen ein vorteilhaftes Fließverhalten aufweisen. Gleichzeitig sollen die Stabilisatoren eine möglichst geringe Menge flüchtiger organischer Verbindungen enthalten und somit auch für den Einsatz in VOCarmen oder VOC-freien Beschichtungsmitteln geeignet sein.

Diese und weitere Aufgabe werden durch N,N,N',N'-Tetrakis(2-hydroxypropyl)hexan-1,6-diamin gelöst.

So wurde gefunden, dass N,N,N',N'-Tetrakis(2-hydroxypropyl)hexan-1,6-diamin in wässrigen Beschichtungsmitteln, welche Wasserglas und mindestens ein organisches, polymeres Bindemittel enthalten, einen Viskositätsanstieg auch bei längerer Lagerung wirksam verhindert oder verringert.

Ferner hat der Einsatz von N,N,N',N'-Tetrakis(2-hydroxypropyl)hexan-1,6-diamin in derartigen Beschichtungsmitteln zur Folge, dass die Viskosität der wässrigen Beschichtungsmittel nach einer beispielsweise durch das Aufbringen mittels eines Pinsels erzeugten Scherung verzögert auf das Ausgangsniveau zurückkehrt. Dies erlaubt sowohl ein gleichmäßiges Verlaufen des Anstrichs als auch eine gleichmäßige Dicke der aufgebrachten Schicht. Dieser Vorteil tritt insbesondere bei Wasserglas und mindestens ein organisches, polymeres Bindemittel enthaltenden wässrigen Beschichtungsmitteln zutage, wenn diese lösungsmittelarm oder lösungsmittelfrei formuliert sind. Dementsprechend betrifft die Erfindung die Verwendung von N,N,N',N'-Tetrakis(2-hydroxypropyl)hexan-1,6-diamin als Additiv in lösungsmittelarmen oder lösungsmittelfreien wässrigen Beschichtungsmittel zur Verbesserung des Viskositätsverhaltens des wässrigen Beschichtungsmittels, welche Wasserglas und mindestens ein organisches, polymeres Bindemittel enthalten.

Die Erfindung betrifft insbesondere die Verwendung von N,N,N',N'-Tetrakis(2-hydroxypropyl)hexan-1,6-diamin in lösungsmittelarmen oder lösungsmittelfreien wässrigen Beschichtungsmitteln, welche Wasserglas und mindestens ein organisches, polymeres Bindemittel enthalten, zur Verlangsamung des Wiederanstiegs der Viskosität nach Scherung des Beschichtungsmittels.

Außerdem betrifft die Erfindung lösungsmittelarme sowie lösungsmittelfreie wässrige Beschichtungsmittel, die Wasserglas, mindestens ein organisches, polymeres Bindemittel und N,N,N',N'-Tetrakis(2-hydroxypropyl)hexan-1,6-diamin enthalten.

N,N,N',N'-Tetrakis(2-hydroxypropyl)hexan-1,6-diamin weist folgende Struktur der Formel (I) auf:

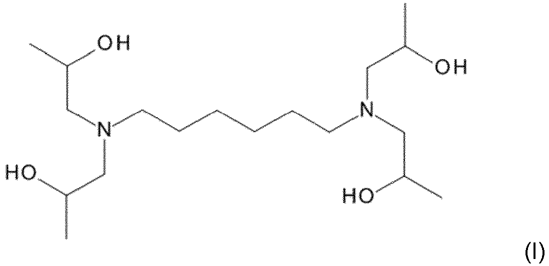

N,N,N',N'-Tetrakis(2-hydroxypropyl)hexan-1,6-diamin ist bekannt (CAS 16607-74-2) und kann in an sich bekannter Weise durch Umsetzung von Hexan-1,6-diamin mit Propylenoxid hergestellt werden, beispielsweise gemäß des Verfahrens nach CS 222448 B1.

Herstellungsbedingt kann N,N,N',N'-Tetrakis(2-hydroxypropyl)hexan-1,6-diamin Verunreinigungen enthalten. Vorzugsweise wird ein N,N,N',N'-Tetrakis(2-hydroxypropyl)-hexan-1,6-diamin verwendet, das einen Gehalt an der Verbindung der Formel (I) von wenigstens 90 Gew.-%, insbesondere wenigstens 95 Gew.-% aufweist. Vorzugsweise enthält das N,N,N',N'-Tetrakis(2-hydroxypropyl)hexan-1,6-diamin keine flüchtigen organischen Verbindungen. Unter flüchtigen organischen Verbindungen versteht man organische Verbindungen nach der Definition der DIN EN ISO 11890-2:2013. Vorzugsweise enthält N,N,N',N'-Tetrakis(2-hydroxypropyl)hexan-1,6-diamin weniger als 1000 ppm flüchtige organische Verbindungen, bestimmt nach DIN EN ISO 11890-2:2013. Aus praktischen Gründen setzt man N,N,N',N'-Tetrakis(2-hydroxypropyl)hexan-1,6-diamin in Form einer wässrigen Lösung ein. Diese weist typischerweise einen Gehalt an N,N,N',N'-Tetrakis(2-hydroxypropyl)hexan-1,6-diamin im Bereich von 5 bis 50 Gew.-%, insbesondere 10 bis 40 Gew.-% auf.

Vorzugsweise enthalten die wässrigen Beschichtungsmittel N,N,N',N'-Tetrakis(2-hydroxypropyl)hexan-1,6-diamin in einer Menge von 0,05 bis 3,0 Gew.-%, insbesondere 0,1 bis 1,5 Gew.-%, bezogen auf das Gesamtgewicht des wässrigen Beschichtungsmittels. Sofern nicht anders angegeben, sind prozentuale Angaben in der gesamten Offenbarung als Gewichtsprozent zu verstehen, bezogen auf das Gesamtgewicht des wässrigen Beschichtungsmittels.

Die Wasserglas und mindestens ein organisches, polymeres Bindemittel enthaltenden wässrigen Beschichtungsmittel sind lösungsmittelarm oder lösungsmittelfrei formuliert. Hierunter versteht man, dass die wässrigen Beschichtungsmittel nur geringe Mengen an flüchtigen organischen Verbindungen, auch als VOC (volatile organic compounds) bezeichnet, enthalten. Erfindungsgemäß weisen die wässrigen Beschichtungsmittel einen Gehalt an flüchtigen organische Verbindungen, d.h. einen VOC-Gehalt, von weniger als 3000 ppm, insbesondere weniger als 2000 ppm und speziell weniger als 1000 ppm auf, bestimmt nach DIN EN ISO 11890-2:2013.

Erfindungsgemäß kommt N,N,N',N'-Tetrakis(2-hydroxypropyl)hexan-1,6-diamin in wässrigen Beschichtungsmitteln zur Verwendung, die Wasserglas enthalten. Als "Wasserglas" werden amorphe, wasserlösliche Natrium-, Kalium- und Lithiumsilikate bezeichnet, die üblicherweise in Form einer wässrigen Lösung vorliegen. Je nachdem, ob überwiegend Natrium-, Kalium- und Lithiumsilicate enthalten sind, werden die Bezeichnungen Natronwasserglas, Kaliwasserglas und Lithiumwasserglas verwendet. Hierunter ist Kaliwasserglas bevorzugt.

In den wässrigen Beschichtungsmitteln kann neben Wasserglas auch ein Alkalimetallalkylsilikonat enthalten sein. Unter einem "Alkalimetallalkylsilikonat" wird insbesondere eine Verbindung der Formel MOSi(R)(OH)₂ verstanden, wobei ein Alkalimetallkation und R ein Alkylrest, insbesondere ein Methylrest, ist. Diese Alkalimetallalkylsilikonate erlauben die Bildung homogener Oberflächen und zeichnen sich durch eine gute Handhabbarkeit aus. Alkalimetallalkylsilikonate können beispielsweise durch die Umsetzung von Alkylsilantriol mit einem Alkalimetallhydroxid erhalten werden. Der Anteil an Alkalimetallalkylsilikonat wird jedoch vorzugsweise 50 Gew.-%, bezogen auf den Wasserglasanteil in den wässrigen Beschichtungsmitteln, nicht überschreiten.

In den Alkalimetallalkylsilikonaten ist das Alkalimetallkation vorzugsweise ausgewählt unter Lithium-, Natrium- und/oder Kaliumkationen. Unter dem Begriff "Alkyl" werden lineare und verzweigte cyclische und acyclische, insbesondere acyclische, Kohlenwasserstoffe verstanden, üblicherweise mit einer Gesamtzahl von 1 bis 18 Kohlenstoffatomen. Der Alkylrest R ist vorzugsweise ausgewählt unter Methyl, Ethyl, n-Propyl, isoPropyl, n-Butyl, iso-Butyl, tert-Butyl, n- Pentyl, iso-Pentyl, tert-Pentyl, Neopentyl und Cyclohexyl. Bevorzugt ist der Alkylrest R Methyl. Unter den Alkalimetallalkylsilikonaten ist Kaliummethylsilikonat besonders bevorzugt.

Die erfindungsgemäßen wässrigen Beschichtungsmittel enthalten üblicherweise 1 bis 30 Gew.-%, insbesondere 2 bis 10 Gew.-%, Wasserglas oder ein Gemisch aus Wasserglas und Alkalimetallalkylsilikonat. Die Gewichtsanteile von Wasserglas sind auf den Feststoffgehalt des Wasserglases und auf das Gesamtgewicht des wässrigen Beschichtungsmittels bezogen.

Vorzugsweise weisen die wässrigen Beschichtungsmittel einen pH-Wert im Bereich von 10 bis 14 auf. Dieser relativ hohe pH-Wert wird vor allem durch das in den wässrigen Beschichtungsmitteln enthaltene Wasserglas bzw. das gegebenenfalls enthaltene Alkalimetallalkylsilikonat bedingt und kann durch Variation der Menge an Wasserglas bzw. Alkalimetallalkylsilikonat eingestellt werden.

Üblicherweise enthalten die wässrigen Beschichtungsmittel wenigstens ein Pigment. Geeignete Pigmente sind beispielsweise anorganische Weißpigmente, wie Titandioxid, vorzugsweise in der Rutilform, Bariumsulfat, Zinkoxid, Zinksulfid, basisches Bleicarbonat, Antimontrioxid, Lithopone (Zinksulfid + Bariumsulfat), sowie farbige anorganische Pigmente, beispielsweise Eisenoxide, Ruß, Graphit, Zinkgelb, Zinkgrün, Ultramarin, Manganschwarz, Antimonschwarz, Manganviolett, Pariser Blau oder Schweinfurter Grün.

Neben oder anstelle der anorganischen Pigmente können die wässrigen Beschichtungsmittel auch ein oder mehrere organische Farbpigmente, z. B. Sepia, Gummigutt, Kasseler Braun, Toluidinrot, Pararot, Hansagelb, Indigo, Azofarbstoffe, Anthrachinoide und indigoide Farbstoffe sowie Dioxazin, Chinacridon-, Phthalocyanin-, Isoindolinon- und Metallkomplexpigmente enthalten.

Vorzugsweise enthalten die wässrigen Beschichtungsmittel Titandioxid. Dies ist insbesondere dann der Fall, wenn es sich bei dem wässrigen Beschichtungsmittel um eine Farbe wie eine Dispersionssilikatfarbe handelt.

Üblicherweise enthalten die wässrigen Beschichtungsmittel das Pigment in einer Menge von 1 bis 20 Gew.-%, insbesondere 3 bis 12 Gew.-%, beispielsweise 4 bis 10 Gew.-%, bezogen auf das Gesamtgewicht des wässrigen Beschichtungsmittels.

Typischerweise enthalten die wässrigen Beschichtungsmittel einen oder mehrere Füllstoffe. Beispiele für geeignete Füllstoffe sind Alumosilicate, wie Feldspäte, Silicate, wie Kaolin, Talkum, Glimmer, Magnesit, Erdalkalicarbonate, wie Calciumcarbonat, beispielsweise in Form von Calcit oder Kreide, Magnesiumcarbonat, Dolomit, Erdalkalisulfate, wie Calciumsulfat, und Siliciumdioxid. Häufig wird eine Kombination von Füllstoffen mit unterschiedlichen Partikelgrößenfraktionen verwendet. Sofern nicht anders angegeben, bezieht sich der Begriff "Partikelgröße" hier und in der gesamten Offenbarung auf den volumenmittleren Partikeldurchmesser, d. h. den D50-Wert, wie er beispielsweise durch statische Laserlichtstreuung gemäß DIN ISO 13321:2004 bestimmt werden kann.

Vorzugsweise umfasst der Füllstoff wenigstens einen der folgenden Bestandteile: Calciumcarbonat, Talkum und/oder Glimmer. Besonders bevorzugt enthält der Filmstoff Calciumcarbonat, insbesondere Calciumcarbonat verschiedener Partikelgrößenfraktionen.

Üblicherweise enthalten die wässrigen Beschichtungsmittel Füllstoff in einer Menge von 20 bis 80 Gew.-%, insbesondere 30 bis 70 Gew.-%, beispielsweise 40 bis 70 Gew.-%, bezogen auf das Gesamtgewicht des wässrigen Beschichtungsmittels.

Bevorzugt sind die erfindungsgemäßen wässrigen Beschichtungsmittel als weißpigmenthaltige Beschichtungsmittel ausgestaltet, d. h. sie enthalten wenigstens ein Weißpigment und gegebenenfalls einen oder mehrere Füllstoffe. Insbesondere enthalten sie als Weißpigment Titandioxid, vorzugsweise in der Rutilform, gegebenenfalls in Kombination mit einem oder mehreren Füllstoffen. Besonders bevorzugt enthalten die erfindungsgemäßen Beschichtungszusammensetzungen ein Weißpigment, insbesondere Titandioxid, vorzugsweise in der Rutilform, in Kombination mit einem oder mehreren Füllstoffen, insbesondere Calciumcarbonat bzw. Gemischen von Calciumcarbonat mit Talkum und/oder Glimmer, wobei das Calciumcarbonat vorzugsweise mindestens zwei verschiedene Partikelgrößenfraktionen enthält.

Die Gesamtmenge an Füllstoff und Pigment ist üblicherweise relativ hoch. Je nachdem, ob es sich beispielsweise um eine Innenraumfarbe oder um eine Fassadenfarbe handelt, variiert der Füllstoff- und Pigmentgehalt. Innenfarben sind in der Regel hochgefüllt, weisen also eine Gesamtmenge an Füllstoff und Pigment von mehr als 40 Gew.-%, bezogen auf das Gesamtgewicht des wässrigen Beschichtungsmittels, auf. Rezepturen für Fassadenfarben enthalten ebenso wie Seidenglanzfarben in der Regel weniger Füllstoff und mehr Bindemittel.

Die wässrigen Beschichtungsmittel enthalten ein organisches, polymeres Bindemittel. Vorzugsweise liegt das organische, polymere Bindemittel in den wässrigen Beschichtungsmitteln in Form einer Dispersion, sprich in Form einer wässrigen Polymerdispersion, vor. Unter einer Polymerdispersion ("Polymerlatex") wird eine kolloidal stabile Dispersion von Polymerpartikeln in einer wässrigen Phase verstanden. Die Partikelgröße (D50-Wert) der in wässriger Dispersion vorliegenden Polymere liegt in der Regel im Bereich von 20 bis 1000 nm, häufig im Bereich von 50 bis 500 nm.

Das organische, polymere Bindemittel ist vorzugsweise unter Acrylatdispersionspolymeren ausgewählt. Unter "Acrylatdispersionspolymeren" werden Polymere verstanden, welche durch Homo- oder Copolymerisation von begrenzt wasserlöslichen Acrylatester-Monomeren, gegebenenfalls mit Comonomeren, wie beispielsweise mit Styrol oder Butadien, und gegebenenfalls polaren Hilfsmonomeren, erhalten werden. Bei der Copolymerisation mit Styrol werden Stryolacrylatdispersionen erhalten, welche eine hohe Resistenz gegenüber Hydrolyse und Verseifungszahl aufweisen. Vorzugsweise ist das organische, polymere Bindemittel eine Stryolacrylatdispersion.

Der Begriff Acrylat umfasst hierbei die Ester der Acrylsäure wie auch die Ester der Methacrylsäure. Begrenzt wasserlösliche Acrylatester-Monomere sind Ethylacrylat, n-Butylacrylat, tert-Butylacrylat, n-Hexylacrylat, 2-Ethylhexylacrylat, Laurylacrylat, Methylmethacrylat, Ethylmethacrylat, n-Butylmethacrylat, tert-Butylmethacrylat, n-Hexylmethacrylat, 2-Ethylhexylmethacrylat und Laurylmethacrylat. Beispiele für polare Hilfsmonomere sind Acrylsäure, Methacrylsäure, Hydroxyalkylester der Acryläsure oder der Methacrylsäure, ethylenisch ungesättigte Sulfonsäuren und deren Alkalimetallsalze.

Die wässrigen Beschichtungsmittel enthalten üblicherweise 1 bis 15 Gew.-%, insbesondere 3 bis 10 Gew.-%, beispielsweise 4 bis 9 Gew.-%, organisches, polymeres Bindemittel, bezogen auf das Gesamtgewicht des wässrigen Beschichtungsmittels.

Die wässrigen Beschichtungsmittel enthalten üblicherweise 1 bis 30 Gew.-%, insbesondere 5 bis 20 Gew.-%, Wasser, bezogen auf das Gesamtgewicht des wässrigen Beschichtungsmittels.

Vorzugsweise enthalten die wässrigen Beschichtungsmittel:
a) 1 bis 20 Gew.-%, insbesondere 3 bis 12 Gew.-%, Pigment;
b) 20 bis 80 Gew.-%, insbesondere 30 bis 70 Gew.-%, Füllstoff;
c) 1 bis 15 Gew.-% , insbesondere 3 bis 10 Gew.-%, organisches, polymeres Bindemittel;
d) 1 bis 30 Gew.-%, insbesondere 2 bis 10 Gew.-%, Wasserglas oder ein Gemisch aus Wasserglas und Alkalimetallalkylsilikonat; im Falle von Wasserglas bezogen auf den Feststoffgehalt des Wasserglases;
e) 0,05 bis 3,0 Gew.-%, insbesondere 0,1 bis 1,5 Gew.-%, N,N,N',N'-Tetrakis(2-hydroxypropyl)hexan-1,6-diamin; und
f) 1 bis 30 Gew.-%, insbesondere 5 bis 25 Gew.-%, Wasser;
jeweils bezogen auf das Gesamtgewicht des wässrigen Beschichtungsmittels.

Der pH-Wert der erfindungsgemäßen Beschichtungsmittel beträgt üblicherweise pH 10 und liegt in der Regel im Bereich von pH 10 bis pH 14, insbesondere im Bereich von pH 10 bis 13.

Die wässrigen Beschichtungsmittel sind vorzugsweise unter Dispersionsmineralfarben und Dispersionsmineralputzen ausgewählt. Insbesondere sind die wässrigen Beschichtungsmittel unter Dispersionssilikatfarben ausgewählt.

Unter Dispersionsmineralfarben und Dispersionsmineralputzen werden Beschichtungsmittel mit mineralischen Bindemitteln verstanden, welche eine Polymerdispersion enthalten. Unter "mineralisches Bindemittel" werden vor allem Kalk und Silikate verstanden. Erfindungsgemäß enthalten die wässrigen Beschichtungsmittel stets Wasserglas.

Dispersionsmineralputze weisen gegenüber Dispersionsmineralfarben in der Regel einen niedrigeren Gewichtsanteil an Wasserglas und Wasser bei einem höheren Gewichtsanteil an Füllstoff auf. Erfindungsgemäße Dispersionsmineralputze und Dispersionsmineralfarben, einschließlich Dispersionssilikatfarben, erfüllen vorzugsweise die jeweils geltenden Bedingungen der DIN 18363:2016.

In einer bevorzugten Ausführungsform sind die wässrigen Beschichtungsmittel unter Dispersionsmineralputzen ausgewählt. In diesem Fall enthalten die wässrigen Beschichtungsmittel vorzugsweise:
a) 3 bis 20 Gew.-% Pigment;
b) 25 bis 70 Gew.-% Füllstoff;
c) 2 bis 10 Gew.-% organisches, polymeres Bindemittel;
d) 1 bis 10 Gew.-% Wasserglas oder ein Gemisch aus Wasserglas und Alkalimetallalkylsilikonat; im Falle von Wasserglas bezogen auf den Feststoffgehalt des Wasserglases;
e) 0,05 bis 2,5 Gew.-% N,N,N',N'-Tetrakis(2-hydroxypropyl)hexan-1,6-diamin; und
f) 5 bis 10 Gew.-% Wasser;
jeweils bezogen auf das Gesamtgewicht des wässrigen Beschichtungsmittels.

In einer weiteren bevorzugten Ausführungsform sind die wässrigen Beschichtungsmittel unter Dispersionsmineralfarben ausgewählt. In diesem Fall enthalten die wässrigen Beschichtungsmittel vorzugsweise:
a) 5 bis 20 Gew.-% Pigment;
b) 20 bis 50 Gew.-% Füllstoff;
c) 3 bis 12 Gew.-% organisches, polymeres Bindemittel;
d) 1 bis 10 Gew.-% Wasserglas oder ein Gemisch aus Wasserglas und Alkalimetallalkylsilikonat; im Falle von Wasserglas bezogen auf den Feststoffgehalt des Wasserglases;
e) 0,05 bis 3,0 Gew.-% N,N,N',N'-Tetrakis(2-hydroxypropyl)hexan-1,6-diamin; und
f) 15 bis 25 Gew.-% Wasser;
jeweils bezogen auf das Gesamtgewicht des wässrigen Beschichtungsmittels.

In einer weiteren bevorzugten Ausführungsform sind die wässrigen Beschichtungsmittel unter Dispersionssilikatfarben ausgewählt. In diesem Fall enthalten die wässrigen Beschichtungsmittel vorzugsweise:
a) 5 bis 20 Gew.-% Pigment;
b) 20 bis 50 Gew.-% Füllstoff;
c) 3 bis 8 Gew.-% organisches, polymeres Bindemittel;
d) 5 bis 15 Gew.-% Wasserglas oder ein Gemisch aus Wasserglas und Alkalimetallalkylsilikonat; im Falle von Wasserglas bezogen auf den Feststoffgehalt des Wasserglases;
e) 0,05 bis 3,0 Gew.-% N,N,N',N'-Tetrakis(2-hydroxypropyl)hexan-1,6-diamin; und
f) 15 bis 25 Gew.-% Wasser;
jeweils bezogen auf das Gesamtgewicht des wässrigen Beschichtungsmittels.

Die erfindungsgemäßen wässrigen Beschichtungsmittel können weitere Hilfsmittel enthalten. Zu den üblichen Hilfsmitteln zählen Netz- oder Dispergiermittel, Filmbildehilfsmittel, Verdicker, Hydrophobierungsmittel, Verlaufsmittel, Biozide und Entschäumer.

Vorzugsweise enthalten die wässrigen Beschichtungsmittel ein Dispergiermittel in einer Menge von 0,1 bis 1,0 Gew.-%, bezogen auf das Gesamtgewicht des wässrigen Beschichtungsmittels. Besonders bevorzugt ist das Dispergiermittel ein Alkalimetallsalz, Ammoniumsalz oder Ammoniumpolyphosphatsalz einer polymeren Carbonsäure, insbesondere ein Alkalimetallsalz einer polymeren Carbonsäure.

Das Alkalimetallsalz einer polymeren Carbonsäure ist beispielsweise ausgewählt unter Alkalimetallsalzen von Polyacrylsäuren und Alkalimetallsalzen von Copolymeren von Acrylsäure und Maleinsäureanhydrid. Alkalimetallsalze von Copolymeren von Acrylsäure und Maleinsäureanhydrid sind beispielsweise Alkalimetallsalze von Copolymeren von Maleinsäureanhydrid und Acrylsäure sowie Alkalimetallsalze von Copolymeren von Maleinsäureanhydrid und Diisobuten. Bevorzugt ist das Alkalimetallsalz einer polymeren Carbonsäure ausgewählt unter Alkalimetallsalzen von Polyacrylsäuren.

Geeignete Filmbildehilfsmittel sind beispielsweise ausgewählt unter aliphatischen Verbindungen, wie Testbenzinen, oder veretherten Carbonsäureestern, wie 2-Butoxyethylacetat. Bevorzugt enthalten die wässrigen Beschichtungsmittel keine Filmbildehilfsmittel, bei denen es sich um flüchtige organische Verbindungen nach Definition der DIN EN ISO 11890-2:2013 handelt. Vorzugsweise enthalten die wässrigen Beschichtungsmittel Filmbildehilfsmittel in einer Menge von weniger als 10 Gew.-%, wie 0,01 bis < 10 Gew.-%, und insbesondere nicht mehr als 2 Gew.-%, wie 0,1 bis 2 Gew.-%, bezogen auf das Gesamtgewicht des wässrigen Beschichtungsmittels.

Typische Verdicker sind vor allem Assoziativverdicker, wie Polyurethan-basierte und Cellulose-basierte Verdicker, beispielsweise Hydroxyethylcellulosen (HEC). Assoziativverdicker sind aus dem Stand der Technik bekannt, sie beispielsweise E.J. Schaller et al., "Associative Thickeners" in Handbook of Coating Additives, Vol. 2 (Editor L.J. Calbo), Marcel Decker 192, pp. 105-164, J. Bieleman "PUR-Verdicker" in Additves for Coatings (Editor J. Bielemann), Wiley 2000, pp 50 - 58. Die Menge des Verdickers beträgt vorzugsweise weniger als 2,5 Gew.-%, besonders bevorzugt weniger als 1,5 Gew.-%, bezogen auf den Feststoffgehalt des wässrigen Beschichtungsmittels.

Als Hydrophobierungsmittel werden vor allem Silikonöle verwendet.

Vorteilhafterweise enthalten die erfindungsgemäßen wässrigen Beschichtungsmittel keine oder nur geringe Mengen an flüchtigen organischen Verbindungen wie beispielsweise organische Lösemittel, welche beispielsweise durch die verwendeten Stabilisatoren und andere Hilfsmittel eingebracht bzw. benötigt werden können. So kann gewerblich erhältliches N,N,N',N'-Tetrakis(2-hydroxypropyl)hexan-1,6-diamin mit flüchtigen organischen Bestandteilen verunreinigt sein oder als Lösung in einem organischen Lösemittel vertrieben werden.

Vorzugsweise enthält N,N,N',N'-Tetrakis(2-hydroxypropyl)hexan-1,6-diamin flüchtige organische Verbindungen in einer Menge von weniger als 1000 ppm, bestimmt nach DIN EN ISO 11890-2:2013. Vorzugsweise enthalten auch die wässrigen Beschichtungsmittel flüchtige organische Verbindungen in einer Menge von weniger als 1000 ppm, bestimmt nach DIN EN ISO 11890-2:2013. Dies ist vor allem für die Verarbeitung der wässrigen Beschichtungsmittel im Innenbereich von Vorteil, da diesbezüglich strikte Obergrenzen für den VOC-Gehalt gelten.

Die Herstellung der wässrigen Beschichtungsmittel erfolgt in an sich bekannter Weise durch Abmischen der Komponenten in hierfür üblichen Mischvorrichtungen. Es hat sich bewährt, aus den Pigmenten, Wasser und gegebenenfalls den Hilfsmitteln eine wässrige Paste oder Dispersion zu bereiten und anschließend das polymere Bindemittel, d. h. in der Regel die wässrige Dispersion des Polymeren, mit der Pigmentpaste bzw. Pigmentdispersion zu vermischen.

Die erfindungsgemäßen wässrigen Beschichtungsmittel können in üblicher Weise auf Substrate aufgebracht werden, z. B. durch Streichen, Spritzen, Tauchen, Rollen, Rakeln. Die erfindungsgemäßen wässrigen Beschichtungsmittel eignen sich vorteilhaft zur Beschichtung von insbesondere mineralischen Untergründen, wie beispielsweise Häuserfassaden.

Die Erfindung wird anhand der beigefügten Zeichnungen und der nachfolgenden Beispiele näher veranschaulicht.

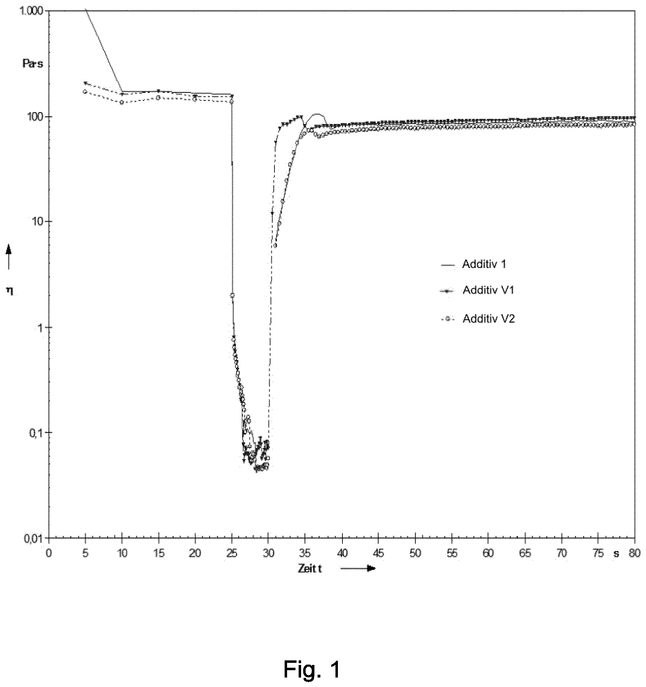

Fig. 1 zeigt das rheologische Verhalten eines erfindungsgemäßen Beschichtungsmittels und zweier Beschichtungsmittel des Standes der Technik, die sich lediglich in der Art des Additivs unterschieden, bei verschiedenen Scherbelastungen unter den in Zusammenhang mit dem Ausführungsbeispiel 2 beschriebenen Messbedingungen.

### Herstellung von Beschichtungsmitteln

Es wurden drei verschiedene Beschichtungsmittel unter Verwendung der folgenden Komponenten hergestellt:

| Komponente | Handelsname | Hersteller | Eigenschaften |
|---|---|---|---|
| Wasser | - | - | - |
| Hydroxyethylcellulose (HEC) | Tylose H 10000 YP2 | | Viskosität: 4200 - 5500 mPa·s ¹⁾ |
| KOH (10 Gew.-% in H₂O) | - | - | - |
| Dispergiermittel | Lopon^{®} 895 | BK-Giulini | Polyacrylsäure-Kaliu msalz, Feststoffgehalt²⁾: 40 Gew.-% |
| N,N,N',N'-Tetrakis(2-hydroxypropyl)hexan-1,6-diamin ³⁾ | - | - | in Wasser, Aktivgehalt²⁾: etwa 30 Gew.-% |
| Entschäumer | Lopon^{®} E 81 | BK-Giulini | Rapsölentschäumer, Wirkstoffgehalt:²⁾ 92% |
| Titandioxid (Rutil) | Kronos^{®} 2056 | Kronos Int. | D50: 1 µm; Ölzahl: 20 |
| Kunststoffdispersion | Acronal^{®} S 790 | BASF | Styrol-Acrylatdispersion, Feststoffgehalt²⁾: 50 Gew.-% VOC Gehalt < 400 ppm |
| Marmormehl (0,5 - 2,5 mm) | Carolith^{®} NP | Omya | D50: 0,5 - 2,5 mm |
| Calciumcarbonat (2 µm) | Omyacarb^{®} 2 | Omya | D50: 2,5 µm; Ölzahl: 19 |
| Calciumcarbonat (10 µm) | Omyacarb^{®} 10 | Omya | D50: 9 µm; Ölzahl: 15 |
| Calciumcarbonat (15 µm) | Omyacarb^{®} 15 | Omya | D50: 12 µm; Ölzahl: 13 |
| Calciumcarbonat (30 µm) | Omyacarb^{®} 30 | Omya | D50: 35 µm; Ölzahl: 12 |
| Talkum | Finntalc^{®} M 15 | Omya | D50: 4,5 µm; Ölzahl: 43 |
| Glimmer | Plastorit^{®} 00 | Imerys | D50: 20 µm; Ölzahl: 31 |
| Kaliwasserglas | Inocot^{®} K-2837 | Van Baerle | Feststoffgehalt²⁾: 28 Gew.-% |
| Hydrophobierungsmittel | SREP^{®} BS 1306 | Wacker | Siliconharz, Feststoffgehalt²⁾: 55 Gew.-% |
| Verdicker | Borchi^{®} Gel L 75 N | Borchers | Polyurethan- Verdicker, Feststoffgehalt²⁾: 55 Gew.-% |

| | | | |
|---|---|---|---|
| ¹⁾ Viskosität einer 1%igen wässrigen Lösung bei 20 °C, bestimmt nach Brookfield bei 20 U·min⁻¹ ²⁾ bezogen auf das Gesamtgewicht der Komponente ³⁾ hergestellt nach dem Verfahrens der CS 222448 B1 durch Umsatz von Hexandiamin mit Propylenoxid in Gegenwart von Triethylamin und Wasser, VOC < 1000 ppm | | | |

### Herstellungsbeispiele 1 bis 3:

Die Beschichtungsmittel wurden im Labormaßstab hergestellt. Dazu wurden die einzelnen Komponenten gemäß der in der nachstehenden Tabelle angegebenen Reihenfolge und Mengen unter ständigem Rühren mittels Dissolver zugegeben und anschließend dispergiert. Die Beschichtungsmittel wurden anschließend in Gefäße gefüllt und diese luftdicht verschlossen.

| Beispiel 1 - Silikatfarbe | |
|---|---|
| Komponente | Anteil [Gew.-%]¹ |
| Wasser | 19,5 |
| Hydroxyethylcellulose (HEC) | 0,3 |
| KOH (10 Gew.-% in H₂O) | 0,1 |
| Dispergiermittel | 0,3 |
| N,N,N',N'-Tetrakis(2-hydroxypropyl)hexan-1,6-diamin | 0,5 |
| Entschäumer | 0,1 |
| Titandioxid (Rutil) | 10 |
| Kunststoffdispersion | 7 |
| Calciumcarbonat (2 µm) | 17 |
| Calciumcarbonat (10 µm) | 13 |
| Talkum | 7 |
| Kaliwasserglas | 24 |
| Hydrophobierungsmittel | 1 |
| Entschäumer | 0,2 |

| | |
|---|---|
| ¹ bezogen auf das Gesamtgewicht des Beschichtungsmittels | |

| Beispiel 2 - Mineralfarbe | |
|---|---|
| Komponente | Anteil [Gew.-%]¹ |
| Wasser | 20,5 |
| Hydroxyethylcellulose (HEC) | 0,2 |
| KOH (10 Gew.-% in H₂O) | 0,1 |
| Dispergiermittel | 0,3 |
| N,N,N',N'-Tetrakis(2-hydroxypropyl)hexan-1,6-diamin | 0,5 |
| Entschäumer | 0,05 |
| Titandioxid (Rutil) | 10 |
| Calciumcarbonat (2 µm) | 14 |
| Talkum | 5 |
| Calciumcarbonat (10 µm) | 12 |
| Glimmer | 5 |
| Kunststoffdispersion | 8,5 |
| Kaliwasserglas | 22,5 |
| Hydrophobierungsmittel | 1 |
| Entschäumer | 0,15 |
| Verdicker | 0,2 |

| | |
|---|---|
| ¹ bezogen auf das Gesamtgewicht des Beschichtungsmittels | |

| Beispiel 3 - Silikatputz | |
|---|---|
| Komponente | Anteil [Gew.-%]¹ |
| Wasser | 7,5 |
| Hydroxyethylcellulose (HEC) | 0,2 |
| KOH (10 Gew.-% in H₂O) | 0,1 |
| Dispergiermittel | 0,2 |
| N,N,N',N'-Tetrakis(2-hydroxypropyl)hexan-1,6-diamin | 0,4 |
| Entschäumer | 0,1 |
| Titandioxid (Rutil) | 4 |
| Kunststoffdispersion | 6,5 |
| Marmormehl (0,5 bis 2,5 mm) | 36 |
| Kaliwasserglas | 11 |
| Calciumcarbonat (15 µm) | 15 |
| Calciumcarbonat (30 µm) | 18 |
| Hydrophobierungsmittel | 1 |

| | |
|---|---|
| ¹ bezogen auf das Gesamtgewicht des Beschichtungsmittels | |

Der VOC-Gehalt der Beschichtungsmittel gemäß den Beispielen 1 bis 3 lag unterhalb 700 ppm, bestimmt nach DIN EN ISO 11890-2:2013.

### Beispiel 4: Silikatfarbe

Die Herstellung der Silikatfarbe erfolgt nach der Rezeptur des Beispiels 1 mit dem Unterschied, dass 0,2 Gew.-% Wasser durch 0,2 Gew.-% Testbenzin ersetzt wurden. Der VOC-Gehalt der Silikatfarbe liegt unterhalb 3000 ppm.

### Beispiel 5: Mineralfarbe

Die Herstellung der Mineralfarbe erfolgt nach der Rezeptur des Beispiels 2 mit dem Unterschied, dass die Mineralfarbe anstelle von 1 Gew.-% nur 0,8 Gew.-% Hydrophobierungsmittel und dafür zusätzlich 0,2 Gew.-% Testbenzin enthält. Der VOC-Gehalt der Mineralfarbe liegt unterhalb 3000 ppm.

### Beispiel 6: Silikatputz

Die Herstellung des Silikatputzes erfolgt nach der Rezeptur des Beispiels 3 mit dem Unterschied, dass der Silikatputz anstelle von 1 Gew.-% nur 0,8 Gew.-% Hydrophobierungsmittel und dafür zusätzlich 0,2 Gew.-% Testbenzin enthält. Der VOC-Gehalt des Silikatputzes liegt unterhalb 3000 ppm.

### Anwendungsbeispiel 1 - Stabilität

Es wurde die Stabilität des Beschichtungsmittels nach Beispiel 1 untersucht. Hierfür wurde die Viskosität des Beschichtungsmittels nach 1 Tag, 7 Tagen, 14 Tagen bzw. 28 Tagen bestimmt. Zwischen den Messungen wurde das Beschichtungsmittel bei 50 °C luftdicht verschlossen im Ofen gelagert.

Die Viskosität wurde an einem Viskosimeter der Fa. Brookfield mittels Spindelmessung bestimmt. Es wurde gefunden, dass die Viskosität des Beschichtungsmittels nach Beispiel 1 über den beobachteten Zeitraum um weniger als 20 % anstieg und somit lagerstabil war.

Die Stabilität des Beschichtungsmittels nach Beispiel 4 ist mit der Stabilität des Beschichtungsmittels nach Beispiel 1 vergleichbar.

### Anwendungsbeispiel 2 - Rheologie-Messung

Es wurde das rheologische Verhalten von drei unterschiedlichen Beschichtungsmitteln auf Basis des Beispiels 1 bei verschiedenen Scherbelastungen untersucht, wobei die Beschichtungsmittel folgende Additive als Stabilisator enthielten:

| | |
|---|---|
| Beispiel 1: | N,N,N',N'-Tetrakis(2-hydroxypropyl)hexan-1,6-diamin ("Additiv 1"), in Form einer wässrigen Lösung mit einem Aktivgehalt von etwa 30 Gew.-% und einem VOC-Gehalt < 1000 ppm |
| Beispiel V1: | N,N,N',N'-Tetrakis(2-hydroxypropyl)ethan-1,2-diamin ("Additiv V1"), in Form einer wässrigen Lösung mit einem Aktivgehalt von etwa 30 Gew.-% und einem VOC-Gehalt < 1000 ppm |
| Beispiel V2: | Formulierung, enthaltend 20 Gew.-% Bis(dimethyl-2-hydroxypropyl-ammonium)hexan in 1,2-Propylendiol ("Additiv V2") |

In den Beschichtungsmitteln der Beispiele V1 und V2 wurde N,N,N',N'-Tetrakis(2-hydroxypropyl)hexan-1,6-diamin (Additiv 1) bei ansonsten gleicher Rezeptur gemäß Beispiel 1 in gleichen Gewichtsanteilen durch Additiv V1 bzw. Additiv V2 ersetzt.

Die Messungen wurden an einem Platten-Platten-Messgerät der Fa. Anton Paar (Typ MCR 101) vorgenommen. Der Plattenabstand betrug 1 mm, die Umgebungstemperatur betrug 23 °C. Die Scherbelastungen waren ähnlich denen, die auch beim Aufstreichen einer Farbe mit einem Pinsel oder eine Walze auftreten.

Es wurde zunächst in einem ersten Abschnitt der Messung die Viskosität des Beschichtungsmittels bei geringer Scherung gemessen. Anschließend wurde in einem zweiten Abschnitt der Messung die Viskosität des Beschichtungsmittels bei hoher Scherrate gemessen. Schließlich wurde in einem dritten Abschnitt der Messung die Viskosität des Beschichtungsmittels erneut bei geringer Scherung gemessen. Die Details der jeweiligen Abschnitte sind in der folgenden Tabelle zusammengefasst:

| Abschnitt | Messpunkte | Messpunktdauer | Abschnittsdauer | Scherrate |
|---|---|---|---|---|
| 1 | 5 | 5 s | 25 s | 1/s |
| 2 | 50 | 0,1 s | 5 s | 2000/s |
| 3 | 100 | 0,5 s | 50 s | 0,25/s |

Die Ergebnisse sind in Fig. 1 dargestellt. Es ist ersichtlich, dass das Additiv 1 enthaltende Beschichtungsmittel (Beispiel 1) im Vergleich zum Additiv V1 enthaltenden Beschichtungsmittel (Beispiel V1) einen ähnlich verzögerten Wiederanstieg der Viskosität nach einer hohen Scherbelastung zeigt wie das Additiv V2 (Beispiel V2) enthaltende Beschichtungsmittel. Vorteilhafterweise enthält das Additiv 1 enthaltende Beschichtungsmittel (Beispiel 1) im Vergleich zum Additiv V2 enthaltenden Beschichtungsmittel (Beispiel V2) kein externes organisches Lösungsmittel.

Die Silikatfarbe des Beispiels 4 zeigt bei unterschiedlichen Scherbelastungen ein der Silikatfarbe aus Beispiel 1 vergleichbares Viskositätsverhalten, insbesondere einen verzögerten Wiederanstieg der Viskosität nach einer hohen Scherbelastung.

## Patentansprüche

1. Verwendung von N,N,N',N'-Tetrakis(2-hydroxypropyl)hexan-1,6-diamin als Additiv in einem wässrigen Beschichtungsmittel zur Verbesserung des Viskositätsverhaltens des wässrigen Beschichtungsmittels, wobei das wässrige Beschichtungsmittel Wasserglas und mindestens ein organisches, polymeres Bindemittel enthält und einen Gehalt an flüchtigen organische Verbindungen von weniger als 3000 ppm, bestimmt nach DIN EN ISO 11890-2:2013, aufweist.

2. Verwendung nach Anspruch 1, wobei das wässrige Beschichtungsmittel ausgewählt ist unter Dispersionsmineralfarben und Dispersionsmineralputzen, insbesondere Dispersionssilikatfarben.

3. Verwendung nach Anspruch 1 oder 2, wobei das wässrige Beschichtungsmittel einen pH-Wert im Bereich von 10 bis 14 aufweist.

4. Verwendung nach einem der vorhergehenden Ansprüche, wobei N,N,N',N'-Tetrakis(2-hydroxypropyl)hexan-1,6-diamin flüchtige organische Verbindungen in einer Menge von weniger als 1000 ppm, bestimmt nach DIN EN ISO 11890-2:2013, enthält.

5. Verwendung nach einem der vorhergehenden Ansprüche, wobei das wässrige Beschichtungsmittel N,N,N',N'-Tetrakis(2-hydroxypropyl)hexan-1,6-diamin in einer Menge von 0,05 bis 3,0 Gew.-%, insbesondere 0,1 bis 1,5 Gew.-%, bezogen auf das Gesamtgewicht des wässrigen Beschichtungsmittels, enthält.

6. Verwendung nach einem der vorhergehenden Ansprüche, wobei das organische, polymere Bindemittel im wässrigen Beschichtungsmittel in Form einer Dispersion vorliegt.

7. Verwendung nach einem der vorhergehenden Patentansprüche zur Verlangsamung des Wiederanstiegs der Viskosität des wässrigen Beschichtungsmittels nach Scherung.

8. Wässriges Beschichtungsmittel, enthaltend Wasserglas, mindestens ein organisches, polymeres Bindemittel und N,N,N',N'-Tetrakis(2-hydroxypropyl)hexan-1,6-diamin und das einen Gehalt an flüchtigen organische Verbindungen von weniger als 3000 ppm, bestimmt nach DIN EN ISO 11890-2:2013, aufweist.

9. Wässriges Beschichtungsmittel nach Anspruch 8, wobei das wässrige Beschichtungsmittel ausgewählt ist unter Dispersionsmineralfarben und Dispersionsmineralputzen, insbesondere Dispersionssilikatfarben.

10. Wässriges Beschichtungsmittel nach Anspruch 8 oder 9, enthaltend flüchtige organische Verbindungen in einer Menge von weniger als 1000 ppm, bestimmt nach DIN EN ISO 11890-2:2013.

11. Wässriges Beschichtungsmittel nach einem der Ansprüche Anspruch 8 bis 10, enthaltend
a) 1 bis 20 Gew.-%, insbesondere 3 bis 12 Gew.-%, Pigment;
b) 20 bis 80 Gew.-%, insbesondere 30 bis 70 Gew.-%, Füllstoff;
c) 1 bis 15 Gew.-% , insbesondere 3 bis 10 Gew.-%, organisches, polymeres Bindemittel;
d) 1 bis 30 Gew.-%, insbesondere 2 bis 10 Gew.-%, Wasserglas, oder ein Gemisch aus Wasserglas und Alkalimetallalkylsilikonat; im Falle von Wasserglas bezogen auf den Feststoffgehalt des Wasserglases;
e) 0,05 bis 3,0 Gew.-%, insbesondere 0,1 bis 1,5 Gew.-%, N,N,N',N'-Tetrakis(2-hydroxypropyl)hexan-1,6-diamin; und
f) 1 bis 30 Gew.-%, insbesondere 5 bis 25 Gew.-%, Wasser;
jeweils bezogen auf das Gesamtgewicht des wässrigen Beschichtungsmittels.

12. Wässriges Beschichtungsmittel nach Anspruch 11, wobei das Pigment Titandioxid umfasst.

13. Wässriges Beschichtungsmittel nach Anspruch 11 oder 12, wobei der Füllstoff wenigstens einen der folgenden Bestandteile umfasst: Calciumcarbonat, Talkum und/oder Glimmer, insbesondere Calciumcarbonat verschiedener Partikelgrößenfraktionen.

14. Wässriges Beschichtungsmittel nach einem der Ansprüche 8 bis 13, wobei das organische, polymere Bindemittel ausgewählt ist unter Acrylatdispersionspolymeren.

15. Wässriges Beschichtungsmittel nach einem der Ansprüche 8 bis 14, wobei das Wasserglas Kaliwasserglas ist.

16. Wässriges Beschichtungsmittel nach einem der Ansprüche 8 bis 15, enthaltend weiterhin 0,01 bis 1,0 Gew.-% Dispergiermittel, bezogen auf das Gesamtgewicht des wässrigen Beschichtungsmittels, wobei das Dispergiermittel insbesondere ein Alkalimetallsalz einer polymeren Carbonsäure ist.

## Claims

1. Use of N,N,N',N'-tetrakis(2-hydroxypropyl)hexane-1,6-diamine as an additive in an aqueous coating composition for improving the viscosity behavior of the aqueous coating composition, wherein the aqueous coating composition comprises water glass and at least one organic polymeric binder and has a volatile organic compound content of less than 3,000 ppm, determined according to DIN EN ISO 11890-2:2013.

2. The use according to claim 1, wherein the aqueous coating composition is selected from dispersion mineral paints and dispersion mineral plasters, in particular dispersion silicate paints.

3. The use according to claim 1 or 2, wherein the aqueous coating composition has a pH value in the range of 10 to 14.

4. The use according to any one of the preceding claims, wherein N,N,N',N'-tetrakis(2-hydroxypropyl)hexane-1,6-diamine comprises volatile organic compounds in an amount of less than 1,000 ppm, determined according to DIN EN ISO 11890-2:2013.

5. The use according to any one of the preceding claims, wherein the aqueous coating composition comprises N,N,N',N'-tetrakis(2-hydroxypropyl)hexane-1,6-diamine in an amount of from 0.05 to 3.0% by weight, in particular from 0.1 to 1.5% by weight, based on the total weight of the aqueous coating composition.

6. The use according to any one of the preceding claims, wherein the organic polymeric binder is present in the aqueous coating composition in the form of a dispersion.

7. The use according to any one of the preceding claims for slowing down the renewed increase in viscosity of the aqueous coating composition after shearing.

8. Aqueous coating composition comprising water glass, at least one organic polymeric binder and N,N,N',N'-tetrakis(2-hydroxypropyl)hexane-1,6-diamine and having a volatile organic compound content of less than 3,000 ppm, determined according to DIN EN ISO 11890-2:2013.

9. The aqueous coating composition according to claim 8, wherein the aqueous coating composition is selected from dispersion mineral paints and dispersion mineral plasters, in particular dispersion silicate paints.

10. The aqueous coating composition according to claim 8 or 9, comprising volatile organic compounds in an amount of less than 1,000 ppm, determined according to DIN EN ISO 11890-2:2013.

11. The aqueous coating composition according to any one of claims 8 to 10, comprising
a) 1 to 20% by weight, in particular 3 to 12% by weight, of pigment;
b) 20 to 80% by weight, in particular 30 to 70% by weight, of filler;
c) 1 to 15% by weight, in particular 3 to 10% by weight, of organic polymeric binder;
d) 1 to 30% by weight, in particular 2 to 10% by weight, of water glass, or a mixture of water glass and alkali metal alkyl siliconate; in the case of water glass, based on the solids content of the water glass;
e) 0.05 to 3.0% by weight, in particular 0.1 to 1.5% by weight, of N,N,N',N'-tetrakis(2-hydroxypropyl)hexane-1,6-diamine; and
f) 1 to 30% by weight, in particular 5 to 25% by weight, of water;
each based on the total weight of the aqueous coating composition.

12. The aqueous coating composition according to claim 11, wherein the pigment comprises titanium dioxide.

13. The aqueous coating composition according to claim 11 or 12, wherein the filler comprises at least one of the following components: calcium carbonate, talc and/or mica, in particular calcium carbonate of different particle size fractions.

14. The aqueous coating composition according to any one of claims 8 to 13, wherein the organic polymeric binder is selected from acrylate dispersion polymers.

15. The aqueous coating composition according to any one of claims 8 to 14, wherein the water glass is potassium water glass.

16. The aqueous coating composition according to any one of claims 8 to 15, further comprising 0.01 to 1.0% by weight of a dispersing agent, based on the total weight of the aqueous coating composition, wherein the dispersing agent is in particular an alkali metal salt of a polymeric carboxylic acid.

## Revendications

1. Utilisation de N,N,N',N'-tétrakis(2-hydroxypropyl)hexane-1,6-diamine en tant qu'additif dans un agent de revêtement aqueux pour l'amélioration du comportement de viscosité de l'agent de revêtement aqueux, l'agent de revêtement aqueux contenant du verre soluble et au moins un liant organique polymérique et présentant une teneur en composés organiques volatils de moins de 3 000 ppm, déterminée selon la norme DIN EN ISO 11890-2:2013.

2. Utilisation selon la revendication 1, l'agent de revêtement aqueux étant choisi parmi des peintures minérales en dispersion et des enduits minéraux en dispersion, en particulier des peintures de silicate en dispersion.

3. Utilisation selon la revendication 1 ou 2, l'agent de revêtement aqueux présentant une valeur de pH dans la plage de 10 à 14.

4. Utilisation selon l'une quelconque des revendications précédentes, la N,N,N',N'-tétrakis(2-hydroxypropyl)hexane-1,6-diamine contenant des composés organiques volatils en une quantité de moins de 1 000 ppm, déterminée selon la norme DIN EN ISO 11890-2:2013.

5. Utilisation selon l'une quelconque des revendications précédentes, l'agent de revêtement aqueux contenant la N,N,N',N'-tétrakis(2-hydroxypropyl)hexane-1,6-diamine en une quantité de 0,05 à 3,0 % en poids, en particulier de 0,1 à 1,5 % en poids, par rapport au poids total de l'agent de revêtement aqueux.

6. Utilisation selon l'une quelconque des revendications précédentes, le liant organique polymérique étant présent sous la forme d'une dispersion dans l'agent de revêtement aqueux.

7. Utilisation selon l'une quelconque des revendications de brevet précédentes pour le ralentissement de la remontée de la viscosité de l'agent de revêtement aqueux après cisaillement.

8. Agent de revêtement aqueux, contenant du verre soluble, au moins un liant organique polymérique et de la N,N,N',N'-tétrakis(2-hydroxypropyl)hexane-1,6-diamine et présentant une teneur en composés organiques volatils de moins de 3 000 ppm, déterminée selon la norme DIN EN ISO 11890-2:2013.

9. Agent de revêtement aqueux selon la revendication 8, l'agent de revêtement aqueux étant choisi parmi des peintures minérales en dispersion et des enduits minéraux en dispersion, en particulier des peintures de silicate en dispersion.

10. Agent de revêtement aqueux selon la revendication 8 ou 9, contenant des composés organiques volatils en une quantité de moins de 1 000 ppm, déterminée selon la norme DIN EN ISO 11890-2:2013.

11. Agent de revêtement aqueux selon l'une quelconque des revendications 8 à 10, contenant
a) 1 à 20 % en poids, en particulier 3 à 12 % en poids, de pigment ;
b) 20 à 80 % en poids, en particulier 30 à 70 % en poids, de matière de charge ;
c) 1 à 15 % en poids, en particulier 3 à 10 % en poids, de liant organique polymérique ;
d) 1 à 30 % en poids, en particulier 2 à 10 % en poids, de verre soluble, ou d'un mélange de verre soluble et de siliconate d'alkyle de métal alcalin ; dans le cas du verre soluble, par rapport à la teneur en solides du verre soluble ;
e) 0,05 à 3,0 % en poids, en particulier 0,1 à 1,5 % en poids, de N,N,N',N'-tétrakis(2-hydroxypropyl)hexane-1,6-diamine ; et
f) 1 à 30 % en poids, en particulier 5 à 25 % en poids, d'eau ;
à chaque fois par rapport au poids total de l'agent de revêtement aqueux.

12. Agent de revêtement aqueux selon la revendication 11, le pigment comprenant du dioxyde de titane.

13. Agent de revêtement aqueux selon la revendication 11 ou 12, la matière de charge comprenant au moins l'un des ingrédients suivants : du carbonate de calcium, du talc et/ou du mica, en particulier du carbonate de calcium de différentes fractions de tailles de particules.

14. Agent de revêtement aqueux selon l'une quelconque des revendications 8 à 13, le liant organique polymérique étant choisi parmi des polymères d'acrylate en dispersion.

15. Agent de revêtement aqueux selon l'une quelconque des revendications 8 à 14, le verre soluble étant du verre soluble potassique.

16. Agent de revêtement aqueux selon l'une quelconque des revendications 8 à 15, contenant en outre 0,01 à 1,0 % en poids d'agent de dispersion, par rapport au poids total de l'agent de revêtement aqueux, l'agent de dispersion étant en particulier un sel de métal alcalin d'un acide carboxylique polymérique.
